**Europäisches Patentamt**

(19) **European Patent Office**

**Office européen des brevets**

(11) Veröffentlichungsnummer : **0 028 604**
**B1**

(12) **EUROPÄISCHE PATENTSCHRIFT**

(45) Veröffentlichungstag der Patentschrift :
**04.07.84**

(51) Int. Cl.³ : **G 02 B 1/10, C 23 C 13/00,
C 23 C 15/00**

(21) Anmeldenummer : **80900488.0**

(22) Anmeldetag : **17.03.80**

(86) Internationale Anmeldenummer :
**PCT/DE 80/00031**

(87) Internationale Veröffentlichungsnummer :
**WO/8002749 (11.12.80 Gazette 80/28)**

(54) **REFLEXMINDERUNGS-SCHICHT AUF HOCHREFLEKTIERENDEN OBERFLÄCHEN.**

(30) Priorität : **25.05.79 DE 2921178**

(43) Veröffentlichungstag der Anmeldung :
**20.05.81 Patentblatt 81/20**

(45) Bekanntmachung des Hinweises auf die Patenterteilung : **04.07.84 Patentblatt 84/27**

(84) Benannte Vertragsstaaten :
**CH FR GB NL SE**

(56) Entgegenhaltungen :
**DE-A- 2 557 543**
**FR-A- 1 373 061**
**US-A- 4 101 200**
**SOV.JOURN. OF QUANTUM ELECTRONICS, volume
8, No. 2, February 1978, V.V. Apollonov et al.: "Possible use of intermetallic coatings in power optical elements", pages 262-264.**

(73) Patentinhaber : **ERNST LEITZ WETZLAR GMBH
Ernst-Leitz-Strasse 30 Postfach 20 20
D-6330 Wetzlar 1 (DE)**

(72) Erfinder : **LUDWIG, Roland
Hauptstrasse 30
D-6331 Bischoffen (DE)**

## Beschreibung

Die Anmeldung betrifft eine aus zwei Substanzen bestehende Reflexminderungsschicht zwischen einem Einfallsmedium mit einer Brechzahl $n_1 > 1{,}3$ und einem daran angrenzenden hochreflektierenden Medium.

Es ist bekannt, Masken, Blenden, Spalte, Gitter oder Codieranordnungen in der Weise herzustellen, daß sie in Form einer dünnen undurchlässigen Schicht auf einen transparenten Träger, z. B. Linsen oder planparallele Platten, aufgebracht werden. Dies geschieht meistens durch Aufdampfen im Hochvakuum oder durch Sputtern. Als Schichtmaterial haben sich Metalle, insbesondere Aluminium oder Chrom, bewährt.

Nachteilig wirkt sich dabei das relativ hohe Reflexionsvermögen an den Grenzflächen zwischen dem Metall und den angrenzenden Medien aus, weil die erzeugten Reflexe zu verschiedenartigen Störungen, wie z. B. Kontrastminderung, Streulicht oder Signalverfälschung, führen können.

Bei einer reflexmindernden Schicht mit der optischen Dicke $\lambda_0/4$ zwischen Träger und der Metallschicht muß zur vollständigen Unterdrückung von Reflexionsanteilen die folgende Bedingung erfüllt sein :

$$n_2 = \sqrt{\frac{k_3^2}{n_3 - n_1} \, n_1}$$

Dabei bedeuten :

$n_1$ die Brechzahl eines absorptionsfreien Einfallsmediums,

$n_2$ die Brechzahl einer absorptionsfreien reflexmindernden Schicht,

$n_3$ den Realteil der Brechzahl des hochreflektierenden Materials (Metallschicht),

$k_3$ den Absorptionskoeffizienten des hochreflektierenden Materials und

$\lambda_0$ die Wellenlänge, bei welcher die Reflexion verschwindet.

Die sich aus dieser mathematischen Beziehung ergebenden Brechzahlen für die Schichtmaterialien liegen jedoch bedeutend höher als diejenigen, welche für eine technische Anwendung praktisch zur Verfügung stehen.

Um diese objektive Schwierigkeit zu überwinden, wurde bereits vorgeschlagen, anstelle einer Einfachschicht eine Vielfachschicht vorzusehen, die beispielsweise aus einer Anzahl $\lambda_0/4$- und $\lambda_0/2$-Schichten besteht und deren Brechzahlen an die optischen Konstanten des hochreflektierenden Materials und des angrenzenden Mediums angepaßt sind. Bei diesem Lösungsvorschlag ist es jedoch nachteilig, daß der wirksame Spektralbereich relativ schmal ist.

Es ist daher die Aufgabe der vorliegenden Erfindung, die Nachteile der bekannten Beschichtungen zu vermeiden und die auftretenden Stör-Reflexionen für einen relativ breiten Spektralbereich, insbesondere zwischen 3 und 14 µm, zu eliminieren.

Die Aufgabe wird für eine Reflexminderungsschicht der eingangs genannten Art erfindungsgemäß dadurch gelöst, daß die erste Substanz aus einem absorptionsfreien Material mit einer Brechzahl $n_2 = n_1$ oder zumindest $n_2 \sim n_1$ besteht, daß die zweite Substanz aus einem stark absorbierenden Material, vorzugsweise aus Metall, besteht, daß die Schicht homogen oder sandwichartig strukturiert ist, daß ihre optische Dicke jeweils die $\lambda_0/4$-Bedingung erfüllt und daß ihr Absorptionsvermögen so bemessen ist, daß der in sie eindringende und am hochreflektierenden Medium in Richtung Einfallsmedium reflektierte Strahlenanteil bei Erreichen der Grenzfläche Einfallsmedium/Reflexminderungsschicht praktisch gerade absorbiert ist. Es ist möglich, daß die Reflexminderungsschicht aus mindestens zwei Teilschichten besteht. Dabei kann es zweckmäßig sein, eine unmittelbar auf dem hochreflektierenden Medium aufliegende, aus einem absorptionsfreien Material bestehende, eine Brechzahl $n_2$ mit der Beziehung $n_2 = n_1$ bzw. zumindest $n_2 \sim n_1$ aufweisende erste Teilschicht sowie eine auf dieser angeordnete, aus absorbierendem Material bestehende zweite Teilschicht vorzusehen. Mit Vorteil besteht die erste Teilschicht aus demselben Material wie das Einfallsmedium, beispielsweise aus Germanium, und die zweite Teilschicht aus demselben Material wie das hochreflektierende Medium, beispielsweise aus Chrom.

Nach einer weiteren Ausgestaltung der Erfindung kann die Reflexminderungsschicht auch aus einem homogenen, binären Gemisch bestehen, welches aus einem ersten, dem Einfalls-Medium entsprechenden Material, und aus einem zweiten, dem hochreflektierenden Medium entsprechenden Material zusammengesetzt ist.

Es ist weiterhin möglich, daß die Reflexminderungsschicht eine Vielfachschicht ist, bei der eine unmittelbar auf dem hochreflektierenden Medium aufliegende, aus einem absorptionsfreien Material bestehende, eine Brechzahl $n_2$ mit der Beziehung $n_2 = n_1$ bzw. $n_2 \sim n_1$ aufweisende erste Teilschicht und eine auf dieser angeordnete, aus absorbierendem Material bestehende zweite teilschicht in alternierender Folge abwechseln derart, daß zur Erzielung eines möglichst breiten Bereichs niederer Reflexion wenigstens drei Teilschichten aus dem absorbierenden Material vorgesehen sind.

Nach einer weiteren Ausgestaltung der Erfindung kann die Reflexminderungsschicht bei einem aus Germanium bestehenden Einfalls-Medium und einer aus Chrom bestehenden hochreflektierenden Oberfläche aus einem Gemisch der folgenden Zusammensetzung bestehen : 70 bis 99 Gewichts-% Germanium und 1 bis 30 Gewichts-% Chrom. Dabei besteht für einen Wellenlängenbereich zwischen 3 und 6 µm eine optimierte Gemisch-Zusammensetzung aus 85 Gew.-% Ge und 15 Gew.-% Cr, während für einen Wellenlängenbereich zwischen 8 und 14 µm eine optimierte Gemisch-Zusammensetzung aus 93,5 Gew.-% Ge und 6,5 Gew.-% Cr besteht.

Nach einer besonders vorteilhaften Ausgestaltung der vorliegenden Erfindung ist die Reflexminderungs-Schicht zwischen einer Germanium-Platte und einer Chrom-Maske angeordnet und besteht aus je fünf alternierenden Teilschichten aus Germanium und Chrom, wobei die erste Ge-Teilschicht unmittelbar auf der Chrom-Maske und die letzte Cr-Teilschicht unmittelbar auf der Germanium-Platte angeordnet ist. Zweckmäßigerweise haben dabei die Cr-Teilschichten jeweils eine Dicke von 6,5 nm, die Ge-Teilschichten jeweils eine Dicke von 110 nm und die Chrom-Maske vorzugsweise eine dicke von 200 nm.

Vorzugsweise wird die Reflexminderungs-Schicht durch schichtdickenkontrollierendes Aufdampfen bzw. Simultan-Aufdampfen des Materials bzw. Materialgemisches im Hochvakuum hergestellt. Darüber hinaus ist es aber auch möglich, daß das Aufbringen des Materials bzw. des Materialgemisches simultan oder sukzessiv mittels Sputterns erfolgt, wobei in beiden Fällen (Aufdampfen im Hochvakuum bzw. Sputtern) die Kontrolle des Schichtdickenwachstums mittels eines Schwingquarzes durchgeführt wird.

Die erfindungsgemäße Reflexminderungs-Schicht zeichnet sich durch eine einfache Schichtstruktur aus und ist leicht und reproduzierbar herstellbar. Mit ihr läßt sich innerhalb eines breiten Spektralbereichs eine wirksame Reflexminderung erzielen, wobei eine optimale Wirkung dadurch herbeigeführt werden kann, daß in Abhängigkeit vom jeweils vorliegenden Einfalls-Medium und vom hochreflektierenden Material ein geeignetes Mischungsverhältnis beider Schicht-Materialien durch gezielte Test-Versuche ermittelt werden kann.

In den Zeichnungen wird die Erfindung anhand zweier schematisch skizzierter Ausführungsbeispiele sowie einer graphischen Darstellung näher erläutert. Es zeigen :

Figur 1 den Strahlenverlauf der reflektierten Strahlenanteile in einer bekannten Anordnung mit einem Einfalls-Medium und einer hochreflektierenden Oberfläche ohne zwischengeschaltete Reflexminderungs-Schicht ;

Figur 2 den Strahlenverlauf der reflektierten bzw. absorbierten Strahlenanteile in einer ersten erfindungsgemäßen Ausführungsform ;

Figur 3 eine zweite erfindungsgemäße Ausführungsform mit sandwichartiger Reflexminderungs-Vielfachschicht ; und

Figur 4 eine graphische Darstellung, aus der der Grad der Reflexminderung ersichtlich wird.

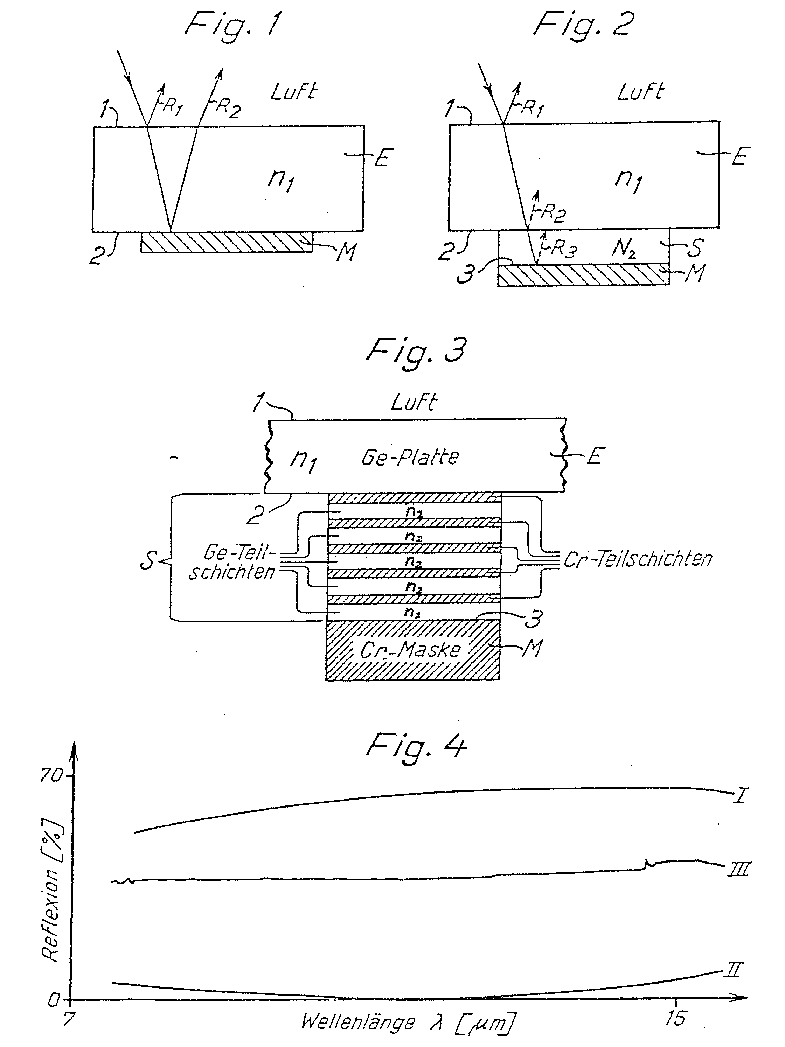

In Fig. 1 ist in bekannter Weise eine planparallele Platte dargestellt, die aus einem absorptionsfreien Material besteht. Sie wird im folgenden als Einfalls-Medium E bezeichnet und weist eine Brechzahl $n_1$ auf.

Ihre Vorderfläche 1 grenzt an Luft ; auf ihrer Rückfläche 2 ist eine dünne, stark absorbierende metallische Schicht M unmittelbar aufgebracht. Ein in der dargestellten Weise einfallendes Lichtstrahlenbündel wird zu einem teil bereits an der Vorderfläche 1 des optischen Einfalls-Mediums E reflektiert. Dies ist in der Fig. 1 durch den Vektor $R_1$, der eine Maß für den Vorderflächenreflex darstellt, schematisch angezeigt. Der in das Einfalls-Medium E eindringende Teil des ursprünglichen Lichtstrahlenbündels wird an der Grenzfläche zwischen dem Einfalls-Medium E und der stark absorbierenden Metallschicht M, also an der Rückfläche 2, reflektiert und tritt als Rückflächenreflex $R_2$ in das Medium Luft aus. Es ist ersichtlich, daß der resultierende Reflexionsanteil (näherungweise : $R_1 + R_2$) bei dieser nicht reflexgeminderten Schichtanordnung ein erhebliches Maß erreicht, worauf weiter unten bei der Beschreibung der Fig. 4 noch näher hingewiesen wird.

Die Fig. 2 ist — ausgehend von Fig. 1 — dadurch abgeändert, daß zwischen dem Einfalls-Medium E und dem stark absorbierenden Material M mit der hochreflektierenden Oberfläche 3 eine erfindungsgemäße Reflexminderungs-Schicht S mit der komplexen Brechzahl $N_2$ angeordnet ist. Dabei gilt $N_2 = n_2 - ik_2$ wobei $k_2$ die Absorptions-Konstante dieser Schicht ist. Ein auf der Vorderfläche 1 auftreffendes Lichtstrahlenbündel wird wie in Fig. 1 zu einem gewissen Teil an dieser reflektiert werden, vgl. den Vektor $R_1$. Dieser Reflex-Anteil soll in der weiteren Erläuterung der Erfindung außer Betracht bleiben. Der das Einfalls-Medium E durchdringende Teil des ursprünglichen Lichtstrahlenbündels wird — sofern $k_2$ genügend klein ist — nur dann zu einem geringen Teil an der Rückfläche 2 reflektiert werden — vgl. den Vektor $R_2$ —, wenn für die beiden Brechzahlen $n_1$ und $n_2$ die Beziehung $n_1 \lesseqgtr n_2$ gilt. Im Falle $n_1 = n_2$ bzw. $n_1 \sim n_2$ entsteht an dieser Grenzfläche kein bzw. nur ein sehr geringer Reflex. Dies hat zur Folge, daß der das Einfalls-Medium E durchdringende Teil des Lichtstrahlenbündels in das Schichtinnere der Reflexminderungsschicht S eindringt und an der hochreflektierenden Oberfläche 3 der stark absorbierenden Schicht M reflektiert wird — vgl. den Vektor $R_3$.

In der Schicht S wird der in ihr verlaufende Strahlenteil jedoch in der Weise absorbiert, daß die Welle auf dem Wege zur Rückfläche 2 — also von der Fläche 3 in Richtung der Fläche 2 — soweit geschwächt wird, daß die amplitude ungefähr so groß ist wie die amplitude der an der Grenzfläche reflektierten Welle. Da die Amplituden relativ klein sind, ist es nicht notwendig, daß sie exakt gleich sind. Das Absorptionsvermögen der Schicht S darf jedoch nur so groß gewählt werden, wie zur Unterdrückung der Reflexion der ganzen Anordnung gerade notwendig ist, da sonst die amplitude der an der Grenzfläche 2 reflektierten Welle größer und damit auch der Bereich niedriger Reflexion schmaler würde.

Wie aus fig. 2 ersichtlich, trägt weder der Reflex $R_2$ noch der Reflex $R_3$ zur Erhöhung der resultierenden Gesamtreflexion bei. Vielmehr besteht diese lediglich aus dem Reflex $R_1$.

Wenn für die Brechzahl der absorptionsfreien Komponente die Bezeichnung $n_2 = n_1$ bzw. zumindest $n_2 \sim n_1$ erfüllt ist, so ist die Ermittlung der passenden Parameter auch ohne eine rechnerische Behandlung des Schicht-Aufbaus durch wenige Aufdampf-Versuche leicht möglich. Die gesuchten Parameter sind hierbei :

1. das Mengenverhältnis der beiden Materialkomponenten,

2. die Gesamt-Dicke der Schicht (die optische Dicke $D$ der homogenen Schicht $S$ beträgt $D \sim n_2 \cdot d_2$, wobei $d_2$ deren geometrische Dicke ist).

Dies läßt sich durch folgende Überlegung veranschaulichen : $V$ sei das Mengenverhältnis der absorbierenden zur absorptionsfreien Materialkomponente. Betrachtet man zunächst kleine Werte von $V$, so verhält sich die Gesamt-Schicht näherungsweise wie das Einfalls-Medium. An der Grenzfläche zwischen dem Einfalls-Medium und der erfindungsgemäßen Schicht wird keine Strahlung reflektiert. Die störende Reflexion an der Grenzfläche zwischen dem hochreflektierenden Medium der erfindungsgemäßen Schicht ist voll wirksam.

Erhöht man $V$ sukzessive, so wird die durch die Schicht zur Grenzfläche 3 und wieder zurück laufende Welle abgeschwächt. An der Grenzfläche 2 tritt wegen der Bedingung $n_2 \sim n_1$ kein nennenswerter Reflex auf. Es ist also durch passende Wahl des Wertes von $V$ in gewissen Grenzen möglich, die störende Reflexion zu unterdrücken. Die Gesamt-Dicke der Schicht beträgt infolge Phasensprungs an der Grenzfläche 3 in der Regel etwas weniger als $\lambda_0/4$. Der richtige Wert ist leicht aus der Lage des gemessenen Reflexions-Minimums abzulesen.

Eine vollständige Unterdrückung der von der Fläche 3 zurücklaufenden Welle würde jedoch erst bei relativ großen Werten von $V$ erreicht werden, entsprechend einer ebenfalls relativ großen Absorption der Reflexminderungsschicht. Nun bewirkt aber gerade diese Absorption, daß an der Grenzfläche 2 ebenfalls eine zurücklaufende Welle erzeugt wird, die mit der von der Grenzfläche 3 kommenden Welle interferiert. Da die $\lambda_0/4$-Bedingung erfüllt ist, löschen sich diese Amplituden aber gegenseitig ganz oder zumindest teilweise aus. Dieser Effekt stellt aber im Prinzip nur eine Korrektur bzw. eine Fein-Abstimmung der Schicht-Parameter dar, weil wegen der Bedingung $n_2 \sim n_1$ die Reflexion an der Grenzfläche 2 nur in der Größenordnung von wenigen Prozent liegt.

In Fig. 3 wird anstelle einer homogenen Reflexminderungsschicht $S$ eine aus je fünf Teilschichten bestehende Reflexminderungsschicht $S$ gezeigt. Die optische Dicke $D_{10}$ dieser Schicht beträgt $D_{10} \sim 5n_2d_2$, wobei $d_2$ die geometrische Dicke der jeweiligen fünf absorptionsfreien Teilschichten bedeutet, während die Gesamtdicke der fünf absorbierenden teilschichten vernachlässigbar ist. Als Einfallsmedium $E$ ist eine planparallele Germanium-Platte vorgesehen. Die hochreflektierende Schicht besteht aus einer Chrom-Maske $M$ der Dicke 200 nm. Zwischen beiden befindet sich eine Vielfachschicht $S$, die aus fünf Germanium-Teilschichten mit der Brechzahl $n_2$ — dabei gilt im vorliegenden Fall $n_1 = n_2$ — sowie aus fünf Chrom-Teilschichten der Dicke 6,5 nm in alternierender Schichtfolge zusammengesetzt ist, wobei unmittelbar auf der hochreflektierenden Oberfläche 3 der Chrom-Maske die erste Ge-Teilschicht und unmittelbar auf der Rückfläche 2 der Ge-Platte die fünfte Cr-Teilschicht zu liegen kommt.

In der Fig. 4 wird die Wirkung der Reflexminderung graphisch veranschaulicht. Auf der senkrechten Koordinatenachse ist die Reflexion in % und auf der waagerechten Koordinatenachse die wellenlänge- und zwar in einem $\lambda$-Intervall zwischen 7 und 15 µm-aufgetragen.

Die Kurve I verdeutlicht den in Fig. 1 dargestellten Fall.

Die Kurve III bezieht sich auf die in Fig. 2 gezeichnete Schichtanordnung. Ein Vergleich zwischen den Kurven I und III zeigt bereits einen deutlichen reflexminderungs-Effekt.

Durch die Kurve II wird das Reflexionsvermögen der reflexgeminderten Germanium-Schicht (Einfalls-Medium $E$) verdeutlicht ; jedoch mit der Maßgabe, daß der Vorderflächenreflex $R_1$ ebenfalls durch eine an sich bekannte Reflexminderungsschicht bis auf einen geringen Rest-Anteil, der in der Größenordnung von 1 bis 2 % liegt, beseitigt wurde.

Die Reflexminderungsschicht (vgl. Fig. 2) bzw. die einzelnen Teilschichten der Reflexminderungs-Vielfachschicht (vgl. Fig. 3) werden im Hochvakuum aufgedampft, wobei die Schichtdicken mit einem Schwingquarzgerät kontrolliert werden. Es ist aber auch möglich, die erfindungsgemäße(n) Schicht(en) mittels Sputtern herzustellen. Für den Fall, daß das Schichtmaterial ein Gemisch, zum Beispiel ein solches aus Cr und Ge, ist, kann die reflexminderungsschicht durch Simultan-Aufdampfen derart erzeugt werden, daß aus einem Tiegel das Chrom und aus einem zweiten Tiegel das Germanium gleichzeitig aufgedampft werden. Es ist indes auch möglich, das pulverisierte Ausgangsgemisch (Ge + Cr) aus einem Tiegel heraus zu verdampfen und als homogene Misch-Schicht auf dem Einfall-Medium, im vorliegenden Fall : Germanium, niederzuschlagen.

Als Werkstoffe für das Einfalls-Medium $E$ kommen außer Germanium auch Chalkogenide, Selenide, Silizium u. a. Materialien in Frage. Stark absorbierende Materialien $M$ für Masken, Codierungen usw. können Metalle, Legierungen, Halbmetalle, Halbleiter etc. sein.

Da es keine technisch gebräuchlichen Schichtmaterialien mit Brechzahlen unter 1,3 (Kryolith) gibt, ist der Brechzahl-Bereich für das Material des Einfalls-Mediums $E$ praktisch auf Werte $n_1 > 1,3$ begrenzt.

## Ansprüche

1. Aus zwei Substanzen bestehende Reflexminderungsschicht zwischen einem Einfallsmedium mit einer Brechzahl $n_1 > 1,3$ und

einem daran angrenzenden hochreflektierenden Medium, dadurch gekennzeichnet, daß die erste Substanz aus einem absorptionsfreien Material mit einer Brechzahl $n_2 = n_1$ oder zumindest $n_2 \sim n_1$ besteht, daß die zweite Substanz aus einem stark absorbierenden Material, vorzugsweise aus Metall, besteht, daß die Schicht (S) homogen oder sandwichartig strukturiert ist, daß ihre optische dicke jeweils die $\lambda_0/4$-Bedingung erfüllt und daß ihr Absorptionsvermögen so bemessen ist, daß der in sie eindringende und am hochreflektierenden Medium in Richtung Einfallsmedium reflektierte Strahlenanteil ($R_3$) bei Erreichen der Grenzfläche Einfallsmedium/Reflexminderungsschicht praktisch gerade absorbiert ist.

2. Reflexminderungsschicht nach Anspruch 1, dadurch gekennzeichnet, daß sie aus mindestens zwei Teilschichten besteht.

3. Reflexminderungsschicht nach Anspruch 2, gekennzeichnet durch eine unmittelbar auf dem hochreflektierenden Medium aufliegende, aus einem absorptionsfreien Material bestehende, eine Brechzahl $n_2$ mit der Beziehung $n_2 = n_1$ bzw. zumindest $n_2 \sim n_1$ aufweisende erste Teilschicht sowie eine auf dieser angeordnete, aus absorbierendem Material (M) bestehende zweite Teilschicht.

4. Reflexminderungsschicht nach einem der Ansprüche 2 und 3, dadurch gekennzeichnet, daß die erste Teilschicht aus demselben Material wie das Einfallsmedium (E), beispielsweise aus Germanium, und die zweite Teilschicht aus demselben Material (M) wie das hochreflektierende Medium, beispielsweise aus Chrom, besteht.

5. Reflexminderungsschicht nach Anspruch 1, dadurch gekennzeichnet, daß sie aus einem homogenen, binären Gemisch besteht, welches aus einem ersten, dem Einfallsmedium (E) entsprechenden Material, und aus einem zweiten, dem hochreflektierenden Medium entsprechenden Material (M) zusammengesetzt ist.

6. Reflexminderungsschicht nach anspruch 2, dadurch gekennzeichnet, daß sie eine Vielfachschicht (S) ist, bei der eine unmittelbar auf dem hochreflektierenden Medium aufliegende, aus einem absorptionsfreien Material bestehende, eine Brechzahl $n_2$ mit der Beziehung $n_2 = n_1$ bzw. $n_2 \sim n_1$ aufweisende erste Teilschicht und eine auf dieser angeordnete, aus absorbierendem Material bestehende zweite Teilschicht in alternierender folge abwechseln derart, daß zur Erzielung eines möglichst breiten Bereichs niederer Reflexion wenigstens drei Teilschichten aus dem absorbierenden Material vorgesehen sind.

7. Reflexminderungsschicht nach Anspruch 5, dadurch gekennzeichnet, daß das Gemisch bei einem aus Germanium bestehenden Einfallsmedium (E) und einem aus Chrom bestehenden hochreflektierenden Medium die folgende Zusammensetzung aufweist:

70 bis 99 Gew.-% Ge,
1 bis 30 Gew.-% Cr.

8. Reflexminderungsschicht nach Anspruch 7, gekennzeichnet durch eine für den Wellenlängenbereich zwischen 3 und 6 μm optimierte Gemischzusammensetzung von 85 Gew.-% Ge und 15 Gew.-% Cr.

9. Reflexminderungsschicht nach Anspruch 7, gekennzeichnet durch eine für den Wellenlängenbereich zwischen 8 und 14 μm optimierte Gemischzusammensetzung von 93,5 Gew.-% Ge und 6,5 Gew.-% Cr.

10. Reflexminderungsschicht nach einem der Ansprüche 2 bis 4 und 6, dadurch gekennzeichnet, daß sie zwischen einer Germanium-Platte und einer Chrom-Maske angeordnet ist und aus je fünf alternierenden Teilschichten aus Germanium und Chrom besteht, wobei die erste Ge-Teilschicht unmittelbar auf der Chrom-Maske und die letzte Cr-Teilschicht unmittelbar auf der Germanium-Platte angeordnet ist.

11. Reflexminderungsschicht nach Anspruch 10, dadurch gekennzeichnet, daß die Cr-Teilschichten jeweils eine Dicke von 6,5 nm, die Ge-Teilschichten jeweils eine Dicke von 110 nm und die chrom-Maske vorzugsweise eine Dicke von 200 nm aufweisen.

**Claims**

1. Reflection-reducing layer consisting of two substances and between a medium of incidence with a refractive index $n_1 > 1.3$ and a highly reflecting medium adjoining thereat, characterised thereby, that the first substance consists of an absorption-free material with a refractive index $n_2 = n_1$ or at least $n_2 \sim n_1$, that the second substance consists of a highly absorbent material, preferably of metal, that the layer (S) is structured homogeneously or in the manner of a sandwich, that its optical thickness always fulfills the $\lambda_0/4$ condition and that its absorptive capacity is so dimensioned that the ray component ($R_3$), which enters into it and is reflected at the highly reflecting medium in the direction of the medium of incidence, is practically just absorbed on reaching the boundary surface between the medium of incidence and the reflection-reducing layer.

2. Reflection-reducing layer according to claim 1, characterised thereby, that it consists of at least two partial layers.

3. Reflection-reducing layer according to claim 2, characterised by a first partial layer, which lies directly on the highly reflecting medium, consists of an absorption-free material and displays a refractive index $n_2$ with the relationship $n_2 = n_1$ or at least $n_2 \sim n_1$, as well as a second partial layer arranged on the first partial layer and consisting of absorbent material (M).

4. Reflection-reducing layer according to one of the claims 2 and 3, characterised thereby, that the first partial layer consists of the same material as the medium of incidence (E), for example of germanium, and the second partial layer consists of the same material (M) as the highly reflecting medium, for example of chromium.

5. Reflection-reducing layer according to claim 1, characterised thereby, that it consists of a homogeneous binary mixture which is composed of a first material corresponding to the medium of incidence (E) and a second material (M) corresponding to the highly reflecting medium.

6. Reflection-reducing layer according to claim 1, characterised thereby, that it is a multiple layer (S), in which a first partial layer, which lies directly on the highly reflecting medium, consists of an absorption-free material and displays a refractive index $n_2$ with the relationship $n_2 = n_1$ or at least $n_2 \sim n_1$, and a second partial layer arranged on the first partial layer and consisting of absorbent material interchange in alternating sequence in such a manner that at least three partial layers of the absorbent material are provided for the attainment of a widest possible range of low reflection.

7. Reflection-reducing layer according to claim 5, characterised thereby, that the mixture, in the case of a medium of incidence (E) consisting of germanium and a highly reflecting medium consisting of chromium, displays the following composition :

70 to 99 % by weight of germanium,
1 to 30 % by weight of chromium.

8. Reflection-reducing layer according to claim 7, characterised by a mixture composition of 85 % by weight of germanium and 15 % by weight of chromium optimised for the wavelength range between 3 and 6 micrometres.

9. Reflection-reducing layer according to claim 7, characterised by a mixture composition of 93.5 % by weight of germanium and 6.5 % by weight of chromium optimised for the wavelength range between 8 and 14 micrometres.

10. Reflection-reducing layer according to one of the claims 2 to 4 and 6, characterised thereby, that it is arranged between a germanium plate and a chromium mask and consists of alternating layers, five each of germanium and chromium, wherein the first germanium partial layer is arranged directly on the chromium mask and the last chromium partial layer is arranged directly on the germanium plate.

11. Reflection-reducing layer according to claim 10, characterised thereby, that the chromium partial layers each display a thickness of 6.5 nanometres, the germanium partial layers each display a thickness of 110 nanometres and the chromium mask preferably displays a thickness of 200 nanometres.

**Revendications**

1. Couche de diminution de reflet, composée de deux substances, entre un milieu incident avec un indice de réfraction $n_1 > 1,3$ et un milieu fortement réfléchissant adjacent à celui-ci, caractérisée en ce que la première substance consiste en une matière exempte d'absorption avec un indice de réfraction $n_2 = n_1$ ou au moins $n_2 \sim n_1$, en ce que la seconde substance consiste en une matière fortement absorbante, de préférence en métal, en ce que la couche (S) est à structure homogène ou en sandwich, en ce que son épaisseur optique remplit chaque fois la condition $\lambda_0/4$ et en ce que son pouvoir absorbant est déterminé de telle façon que la portion de rayonnement (R3) pénétrant dans celle-ci et réfléchie en direction du milieu incident sur le milieu fortement réfléchissant, est pratiquement tout juste absorbée lorsqu'elle atteint la surface de séparation entre le milieu incident et la couche de diminution de reflet.

2. Couche de diminution de reflet selon la revendication 1, caractérisée en ce qu'elle se compose d'au moins deux couches partielles.

3. Couche de diminution de reflet selon la revendication 2, caractérisée par une première couche partielle appliquée directement sur le milieu fortement réfléchissant et consistant en une matière exempte d'absorption, et présentant un indice de réfraction $n_2$ avec la relation $n_2 = n_1$ ou au moins $n_2 \sim n_1$, ainsi que par une deuxième couche partielle disposée sur celle-ci et consistant en une matière absorbante (M).

4. Couche de diminution de reflet selon l'une des revendications 2 et 3, caractérisée en ce que la première couche partielle consiste en la même matière que le milieu incident (E), par exemple en germanium et la seconde couche partielle consiste en la même matière (M) que le milieu fortement réfléchissant, par exemple en chrome.

5. Couche de diminution de reflet selon la revendication 1, caractérisée en ce qu'elle consiste en un mélange homogène binaire qui se compose d'une première matière correspondant au milieu incident (E) et d'une deuxième matière (M) correspondant au milieu fortement réfléchissant.

6. Couche de diminution de reflet selon la revendication 2, caractérisée en ce qu'elle est une couche multiple (S), dans laquelle se succèdent, en une suite alternée, une première couche partielle appliquée directement sur le milieu fortement réfléchissant et consistant en une matière exempte d'absorption et présentant un indice de réfraction $n_2$ avec la relation $n_2 = n_1$ ou $n_2 \sim n_1$, et une deuxième couche partielle disposée sur celle-ci et consistant en une matière absorbante, de telle façon qu'au moins trois couches partielles en la matière absorbante sont prévues pour l'obtention d'un domaine aussi large que possible de faible réflexion.

7. Couche de diminution de reflet selon la revendication 5, caractérisée en ce que le mélange, dans le cas d'un milieu incident (E) consistant en germanium et d'un milieu fortement réfléchissant consistant en chrome, présente la composition suivante :

70 à 99 % en poids de Ge,
1 à 30 % en poids de Cr.

8. Couche de diminution de reflet selon la revendication 7, caractérisée par une composition de mélange, optimisée pour le domaine de longueur d'onde entre 3 et 6 μm, de 85 % en poids de Ge et 15 % en poids de Cr.

9. Couche de diminution de reflet selon la revendication 7, caractérisée par une composition de mélange, optimisée pour le domaine de longueur d'onde entre 8 et 14 μm, de 93,5 % en poids de Ge et 6,5 % en poids de Cr.

10. Couche de diminution de reflet selon l'une des revendications 2 à 4 et 6, caractérisée en ce qu'elle est disposée entre une plaque de germanium et un masque de chrome et consiste en cinq couches partielles alternées respectivement de germanium et de chrome, la première couche partielle de Ge étant disposée directement sur le masque de chrome et la dernière couche partielle de Cr étant disposée directement sur la plaque de germanium.

11. Couche de diminution de reflet selon la revendication 10, caractérisée en ce que les couches partielles de Cr présentent respectivement une épaisseur de 6,5 nm, les couches partielles de Ge présentent respectivement une épaisseur de 110 nm et le masque de chrome présente de préférence une épaisseur de 200 nm.

## Fig. 1

## Fig. 2

## Fig. 3

## Fig. 4